Europäisches Patentamt

European Patent Office

Office européen des brevets

(19)

(11) Veröffentlichungsnummer: **0 422 269 B1**

## (12) EUROPÄISCHE PATENTSCHRIFT

(45) Veröffentlichungstag der Patentschrift: **28.04.93**

(21) Anmeldenummer: **89118868.2**

(22) Anmeldetag: **11.10.89**

(51) Int. Cl.5: **A23F 3/30**, A23F 3/34, A23F 3/40

---

(54) **Verfahren zum Herstellen von Instant-Tees und Instant-Tee selbst.**

---

(43) Veröffentlichungstag der Anmeldung:
**17.04.91 Patentblatt 91/16**

(45) Bekanntmachung des Hinweises auf die Patenterteilung:
**28.04.93 Patentblatt 93/17**

(84) Benannte Vertragsstaaten:
**AT BE CH DE ES FR GB IT LI NL SE**

(56) Entgegenhaltungen:
**EP-A- 0 099 557**
**EP-A- 0 230 513**
**DE-A- 2 264 394**

**L. O'BRIEN NABORS et al.: "Alternative Sweeteners", 1986, Seiten 217-218,238, Marcel Dekker, Inc., New York, US**

**FOOD SCIENCE & TECHNOLOGY ABSTRACTS, Nr. 76-04-T0126 (76023024); & JP-A-50 22 105 (K. HAYASHIBARA) 1975**

(73) Patentinhaber: **RICOLA AG**
**Postfach 130**
**CH-4242 Laufen(CH)**

(72) Erfinder: **Koller, Robert, Dr.**
**Gründlirainstrasse 15**
**CH-4242 Laufen(DE)**
Erfinder: **Eng, Markus**
**Baselmattweg 219**
**CH-4123 Allschwil(DE)**

(74) Vertreter: **Fleck, Thomas, Dr.Dipl.-Chem. et al**
**Patentanwälte Raffay, Fleck & Partner Postfach 32 32 17**
**W-2000 Hamburg 13 (DE)**

**Beschreibung**

Die Erfindung betrifft ein Verfahren zum Herstellen von Instant-Tees und dergleichen nach dem Oberbegriff des Anspruches 1 und Instant-Tee selbst.

Derartige Instant-Tees sind aus der EP-A-00 99 557 bekannt. Als Träger wird dort der Zusatz von kurzkettigem Protein aus Bindegewebe in einer Menge von 44,9 bis 94,7 Gew% gefordert, um die gewünschte Haltbarkeit, Dosierbarkeit und Handhabbarkeit, wie Schüttdichte und dergleichen, zu erreichen. Nachteilig hat sich jedoch bei diesen vorbekannten Produkten bemerkbar gemacht, daß der vorhandene Eigengeschmack der kurzkettigen Proteine nicht vollständig unterdrückt werden konnte und von einem Teil des Publikums deshalb als unangenehm empfunden wurde.

Auch ist es bekannt, daß Isomaltit als Süßstoff und körpergebundes Trägermaterial geeignet ist (vgl. DE-A-2264394). Der vorliegenden Erfindung liegt deshalb die Aufgabe zugrunde, die vorbekannten Verfahren zum Herstellen von Instant-Tees und dergleichen gemäß dem Oberbegriff des Haupt-anspruchs derart zu verbessern, daß sie zu einem Produkt führen, bei dem der Eigengeschmack der kurzkettigen Proteine nicht mehr unangenehm wahrnehmbar ist, wobei jedoch gleichzeitig ein äußerst niedriges Schüttgewicht, ausgezeichnete Stabilität und hervorragende Löslichkeit gewährleistet sein sollen. Ebenso ist es natürlich Ziel der Erfindung, klebrig, hygroskopische Produkte, die verklumpen, zu vermeiden und trotzdem eine gute Sensorik zu erzielen.

Überraschenderweise wird diese Aufgabe und das Ziel dadurch gelöst, daß als Träger und Süssungsmittel eine so hohe Menge wie etwa 37 bis 60 Gew% eines bestimmten Zuckeraustauschstoffes, nämlich Isomaltit, und als Schäumungsmittel ca. 23 bis 37 Gew% kurzkettige Proteine mit Wasser zu einer Aufschlämmung versetzt werden, die anschließend einen Vakuumtrockner durchläuft.

Überraschenderweise hat sich also gezeigt, daß durch die Kombination der gewichtsmäßigen Verteilung von Isomaltit und kurzkettigen Proteinen einerseits und verfahrensgemäßem Einsatz eines Vakuumtrockners andererseits, Produkte mit hervorragenden Eigenschaften hergestellt werden können. Insbesondere wird erfindungsgemäß erreicht, daß der gewichtsmäßige Anteil der kurzkettigen Proteine so stark reduziert ist, daß ihre Geschmacksnote gegenüber den weiteren Bestandteilen untergeht und nicht mehr unangenehm auftritt. Die eigentliche Trägerfunktion wird erfindungsgemäß von dem üblicherweise nur in untergeordneter Menge vorhandenen Zuckeraustauschstoff übernommen, wobei gerade die Auswahl des Isomaltits das gewünschte Ergebnis liefert.

Dieser abgestimmte Einsatz von Isomaltit und kurzkettigen Proteinen im Vakuum ermöglicht die erfindungsgemäße Herstellung von stabilen, festen und leichten Schäumen mit entsprechend großer Oberfläche, die spontan beim Trocknen im Vakuum entstehen. Vorteilhafterweise kann in verfahrensgemäßer Hinsicht noch vor der Eingabe in den Vakuumtrockner Luft oder andere Gase in die zu trocknende Aufschlämmung eingeschlagen werden. Ein weiterer Vorteil besteht ebenfalls im Einsatz eines Vakuum-Bandtrockners.

Die erfindungsgemäß hergestellten Instant-Tee-Produkte weisen sämtlich ein sehr niedriges Schüttgewicht im Bereich von 80 bis 150 Gramm pro Liter auf, zeigen keine hygroskopischen Eigenschaften, sondern sind stabil und hervorragend löslich durch die große Oberfläche der getrockneten Partikel.

Im folgenden werden anhand der Tabellen verschiedene Versuchsreihen und ihre Ergebniss beschrieben, aus denen die besten Ausführungsformen der Erfindung sich ableiten:

In der Tabelle 1 sind die Versuche V1 bis V7 aufgeführt bezüglich des Verhältnisses zwischen den kurzkettigen Proteinen (Gelita Sol D, Warenzeichen) und Isomaltit (Palatinit PF, Warenzeichen). Die angegebenen Werte beziehen sich nicht auf die Gesamtmischung, sondern nur auf das Verhältnis der Proteine zum Isomaltit.

Die Versuche V1 bis V6 wurden alle mit 26 Gew% Kräuterextrakt (umfassend Pfefferminze, Verbena, Orangenblätter, Lindenblüten und Kamille; es dürfte jedoch einleuchten, daß sich auch andere Zusammensetzungen, wie sie im Oberbegriff des Hauptanspruchs genannt sind, ebenso eignen) durchgeführt.

Die in Klammern für die Versuche V4 bis V7 gemachten Angaben beziehen sich auf die Gewichtsprozente der Gesamtmischung.

Tabelle I

|  | V1 | V2 | V3 | V4 | V5 | V6 | V7 |
|---|---|---|---|---|---|---|---|
| kurzkettige Proteine | 2 | 5 | 10 | 20 (14,8) | 35 (25,9) | 50 (37) | 35 (33) |
| Isomaltit | 98 | 95 | 90 | 80 (59,2) | 65 (48,1) | 50 (37) | 65 (65) |

Aus der Tabelle II sind für die Versuche V1 bis V7 Angaben zur Viskosität, Schaumdicke auf dem Band und der Schüttdichte, gemacht. Die Versuche V1 bis V3 konnten nicht gesiebt werden, da die Teebrocken zu hart sind. Dieses ist mit einem * gekennzeichnet. Der Versuch V4 lieferte ein Produkt, das stark hygroskopisch war.

## Tabelle II

|  | V1 | V2 | V3 | V4 | V5 | V6 | V7 |
|---|---|---|---|---|---|---|---|
| Viskosität in d Pa's (dezipascalsekunden) | 4000 | 4000 | 2500 | 1100 | 600 | 800 | 400 |
| Schaumdicke auf dem Band in mm | 6 | 6 | 6 | 10 | 30 | 80 | 60 |
| Schüttdichte vom Endprodukt in g/l | * | * | * | 260** | 150 | 100 | 100 |

Die in Tabelle II angeführten Eigenschaften zeigen insgesamt, daß die Produkte der Versuche V1 bis V4 ungeeignet sind. Gute Werte und Eigenschaften zeigen hingegen die Produkte der Versuche V5 und V6 (V7 stellt lediglich einen Kontrollversuch ohne Kräuterextrakt dar).

Aus den Tabellen 1 und II geht also hervor, daß ein Gewichtsanteil von 14,8 Gew% der kurzkettigen Proteine, bezogen auf die Gesamtmischung, unzureichend ist, da die Viskosität zu hoch ist, so daß erstens eine unzureichende Aufschäumung auf dem Band stattfindet (zu geringe Schaumdicke) und zweitens das Schüttgewicht zu hoch ist. Die Tabellen zeigen also, daß das Verhältnis der kurzkettigen Proteine zum Isomaltit bzw. ihr Anteil an der Gesamtmischung einen direkten Einfluß auf die Viskosität und diese wiederum auf die Schaumdicke hat, welche schließlich die Schüttdichte beeinflußt.

Die ideale Schaumdicke auf dem Band liegt etwa zwischen 30 und 100 mm, um eine regelmäßige Trocknung zu erhalten. Wenn der Schaum zu hoch wird, d.h. eine Schaumdicke von über 100 mm auftritt, treten Blasen auf, die eine unregelmäßige Trocknung hervorrufen. Fällt die Schaumdicke unter 30 mm ab, besteht eine Tendenz zum Verklumpen, wobei harte Teebrocken entstehen.

In einer zweiten Versuchsreihe wurden mit dem als bevorzugt angesehenen Verhältnis der kurzkettigen Proteine zum Isomaltit von 35 Teilen zu 65 Teilen die Versuche V8 bis V11 durchgeführt, bei denen die Kräuterextraktanteile zwischen 5 und 50 Gew% verändert wurden.

Die Tabellen III und IV geben Aufschluß über die Gewichtsverhältnisse und entsprechende Eigenschaften der Endprodukte.

Tabelle III

|  | V8 | V9 | V10 | V11 |
|---|---|---|---|---|
| Kräuterextrakt | 5 % | 15 % | 30 % | 50 % |
| kurzkettige Proteine | 32 % | 28 % | 23 % | 17 % |
| Isomaltit | 63 % | 57 % | 47 % | 33 % |
| Sämtliche %-Angaben stellen Gew% in Bezug auf die Gesamtmischung dar. | | | | |

Tabelle IV

|  | V8 | V9 | V10 | V11 |
|---|---|---|---|---|
| Viskosität in d Pa's | 800 | 1100 | 520 | 50 |
| Schaumdicke auf dem Band in mm | 20 | 25 | 50 | 35 |
| Schüttdichte g/l | * | 155 | 155 | 160 ** |

\* Teebrocken zu hart zum Zerkleinern und Sieben
\*\* ist stark hygroskopisch und wird sofort klebrig

Es dürfte einleuchten, daß sich die Gewichtsverhältnisse in einem gewissen Rahmen verändern können, ohne daß die Produkteigenschaften wesentliche Veränderungen erfahren. Anhand der Angaben in den Tabellen III und IV läßt sich jedoch wiederum sagen, daß ein Kräuterextraktanteil von 5 Gew% in Verbindung mit einem Isomaltitanteil von über 60 Gew% (vgl. V8), ebenso ungeeignet ist, wie ein Produkt mit einem sehr hohen Kräuterextraktanteil von 50 Gew% und so niedrigen Gewichtsanteilen für die kurzkettigen Proteine und das Isomaltit von 17 bzw. 33 Gew% (vgl. V11). Ein geeigneter Kräuterextraktanteil wird deshalb erfindungsgemäß im Bereich von 15 bis 30 Gew% angesiedelt (vgl. V9 und V10). Die entsprechenden Werte der kurzkettigen Proteine und für das Isomaltit ergeben sich dann zu 28 / 23 Gew% bzw. 57 / 47 Gew%, die gut in den im Anspruch 1 angegebenen erfindungsgemäßen Bereich fallen.

Anstelle von Isomaltit wurden auch andere Zuckeraustauschstoffe untersucht. Die Tabelle V zeigt hier die Versuche V12 bis V16, die jeweils einen festen Gewichtsprozentsatz für Kräuterextrakt und kurzkettige Proteine von 20,5 bzw. 32,0 aufweisen.

Die Tabelle VI zeigt dann die entsprechenden Eigenschaften der in den Versuchen V12 bis V16 hergestellten Produkte.

Tabelle V

|  | V12 | V13 | V14 | V15 | V16 |
|---|---|---|---|---|---|
| Kräuterextrakt | 20,5 % | 20,5 | 20,5 | 20,5 | 20,5 |
| kurzkettige Proteine | 32,0 % | 32,0 | 32,0 | 32,0 | 32,0 |
| Aspartame | 0,5 % | 0,5 | -- | 0,5 | 0,5 |
| Malbit pulv. | 47,0 | -- | -- | -- | -- |
| Sorbit pulv. | -- | 47,0 | -- | -- | -- |
| Xylit krist. | -- | -- | 47,0 | -- | -- |
| Lycasin flüssig | -- | -- | -- | 47,0 | -- |
| Malbit flüssig | -- | -- | -- | -- | 47,0 |

Tabelle VI

|  | V12 | V13 | V14 | V15 | V16 |
|---|---|---|---|---|---|
| Viskosität in d Pa's | 500 | 280 | 220 | 270 | 280 |
| Schaumdicke in mm | 100 | 40 | 30 | 70 | 70 |
| Schüttdichte g/l | 60 | * | ** | 60 | 55 |
| Hygroskopizität nach 1 Tag | verklebt zu einem Klumpen | verklebt zu einem Klumpen | -- | verklebt zu einem Klumpen | verklebt zu einem Klumpen |

\* stark hygroskopisch
\*\* klebte schon im Bandtrockner

Sämtliche untersuchten Zuckeraustauschstoffe sind also im erfindungsgemäßen Sind ungeeignet, während überraschenderweise das erfindungsgemäß eingesetzte Isomaltit im Gewichtsbereich von etwa 37 bis 60 Gew% die gewünschten Eigenschaften besitzt und somit weder verklumpt noch klebrig ist.

Weitere Versuche haben gezeigt, daß lediglich ein gewisser Teil des Isomaltits durch Malbitpulver (Maltitol) ersetzt werden kann.

## Patentansprüche

1. Verfahren zum Herstellen von Instant-Tees und Instant-Frucht-Tees in Pulver- oder Granulatform, enthaltend Kakaopulver oder pulverförmige Genußsäuren und/oder Vitamine, Pflanzenextrakte und/oder -pulver und/oder Fruchtextrakte und/oder -pulver sowie Geschmacks- bzw. Süssungs- und/oder Aromastoffe, ein in Wasser klar lösliches, kurzkettiges Protein aus Bindegewebe mit einem mittleren Molekulargewicht von 1000 bis 10.000 (bestimmt nach der Gel-Chromatographiemethode mit collagenen Eichsubstanzen) unter Verzicht auf jegliche kariogenen Kohlenhydrate, dadurch gekennzeichnet, daß
als Träger und Süssungsmittel ca. 37 bis 60 Gew% Isomaltit (bezogen auf die Gesamtmischung)
und als Schäumungsmittel ca. 23 bis 37 Gew% der genannten kurzkettigen Proteine (bezogen auf die Gesamtmischung), mit Wasser zu einer Aufschlämmung versetzt werden, die anschließend einen Vakuumtrockner durchläuft.

2. Verfahren nach Anspruch 1, dadurch gekennzeichnet, daß man als Pflanzen- und Fruchtextrakt etwa 15 - 30 Gew% Kräuterextrakt (bezogen auf die Gesamtmischung) einsetzt.

3. Verfahren zur Herstellung von Instant-Getränken nach Anspruch 1 und 2, dadurch gekennzeichnet, daß man einen Vakuum-Bandtrockner einsetzt und die Aufschlämmung bei einer Temperatur im Bereich von 25 bis 120°C für eine Zeitspanne von ca. 1 Stunde trocknet.

4. Verfahren nach Anspruch 1 oder 3, dadurch gekennzeichnet, daß man vor der Eingabe in den Vakuumtrockner Luft oder andere Gase in die zu trocknende Aufschlämmung einschlägt.

5. Verfahren nach Anspruch 1 bis 4, dadurch gekennzeichnet, daß man den aus der Aufschlämmung entstandenen Trockenschaum durch Brechen, Sieben, Granulieren, Pressen und/oder Agglomerieren aufbereitet.

6. Instant-Tee, gekennzeichnet durch seine Herstellung nach einem oder mehreren der vorstehenden Ansprüche, insbesondere mit einem Kräuterextraktanteil von ca. 25 Gew%, einem Isomaltitanteil von ca. 48 Gew% und einem Anteil an kurzkettigen Proteinen von ca. 26 Gew% bei restlichem Anteil an ätherischen Oelen von ca. 1 % Gew%.

## Claims

1. Process for producing instant teas and instant fruit teas in powder or granule form, containing cocoa powder or pulverulent food acids and/or vitamins, plant extracts and/or powders and/or fruit extracts and/or powders, as well as flavouring or sweetening and/or aromatizing substances, a short-chain protein clearly soluble in water from connective tissue with an average molecular weight of 1,000 to 10,000 (determined by gel chromatography with collagenic calibrating substances) and without using any cariogenic carbohydrates, characterized in that as the carrier and sweetener approximately 37 to 60% by weight of isomaltite (based on the total mixture) and as the foaming agent approximately 23 to 37% by weight of said short-chain proteins (based on the total mixture) are mixed with water to form a suspension, which then passes through a vacuum drier.

2. Process according to claim 1, characterized in that approximately 15 to 30% by weight of herb extract (based on the total mixture) is used as the plant and fruit extract.

3. Process for producing instant beverages according to claims 1 and 2, characterized in that use is made of a vacuum belt drier and the suspension is dried at a temperature in the range 25 to 120 °C for approximately 1 hour.

4. Process according to claim 1 or 3, characterized in that prior to introduction into the vacuum drier air or other gases is introduced into the suspension to be dried.

5. Process according to claims 1 to 4, characterized in that the dry fan obtained from the suspension is processed by crushing, screening, granulating, compressing and/or agglomerating.

6. Instant tea, characterized by its preparation according to one or more of the preceding claims, particularly with a herb extract proportion of approximately 25% by weight, an isomaltite proportion of approximately 48% by weight and a short-chain protein proportion of approximately 26% by weight, the remaining proportion of approximately 1% by weight being essential oils.

**Revendications**

1. Procédé de fabrication de thés instantanés et de tisanes instantanées sous forme pulvérulente ou granulée, contenant de la poudre de cacao ou des acides comestibles sous forme pulvérulente et/ou des vitamines, des extraits et/ou de la poudre de plante et/ou des extraits et/ou de la poudre de fruit, ainsi que des additifs gustatifs ou des édulcorants et/ou des arômes une protéine, à chaîne courte, donnant dans l'eau une solution limpide, provenant du tissu conjonctif et d'un poids moléculaire moyen de 1000 à 10.000 (déterminé selon le procédé de chromatographie sur gel avec des produits-étalons à base de collagène) avec renonciation à tout hydrate de carbone provoquant des caries procédé caractérisé par le fait que l'on mélange avec de l'eau, comme porteur et agent édulcorant, environ 37 à 60% en poids d'isomaltite (rapporté au mélange total) et comme agent moussant environ 23 à 37% en poids de la protéine à chaîne courte mentionnée (rapporté au mélange total), pour obtenir une suspension qui parcourt ensuite un séchoir sous vide.

2. Procédé selon la revendication 1, caractérisé par le fait que comme extrait de plante et de fruit on utilise environ 15 à 30% en poids d'extrait de plantes médicinales (rapporté au mélange total).

3. Procédé de fabrication de boisson instantanées selon les revendications 1 et 2, caractérisé par le fait que l'on utilise un séchoir à bande sous vide et que la suspension sèche sous une température allant de 25 à 120°C pendant une durée d'environ 1 heure.

4. Procédé selon la revendication 1 ou 3, caractérisé par le fait qu'avant l'introduction dans le séchoir sous vide on fait barboter de l'air ou d'autres gaz dans la suspension à sécher.

5. Procédé selon la revendication 1 à 4, caractérisé par le fait que l'on traite la mousse sèche que donne la suspension par broyage, tamisage, granulation, pressage et/ou agglomération.

6. Thé instantané caractérisé par sa fabrication selon une ou plusieurs des revendications précédentes, en particulier avec une proportion d'extrait d'herbes médicinales d'environ 25% en poids, une proportion d'isomaltite d'environ 48% en poids et une proportion de protéines à chaîne courte d'environ 26% en poids, pour une proportion résiduelle d'huiles essentielles d'environ 1% en poids.